# EUROPÄISCHE PATENTSCHRIFT

(11) **EP 2 220 355 B1**
(45) Veröffentlichungstag und Bekanntmachung des Hinweises auf die Patenterteilung: **21.12.2016**
(21) Anmeldenummer: 08861603.2
(22) Anmeldetag: 30.10.2008
(51) Int. Cl.: F02D 9/06, F02D 13/04, F01L 13/06, B60W 10/06, B60W 10/10, B60W 30/18

(54) **VERFAHREN ZUM STEUERN EINER MOTORBREMSEINRICHTUNG EINER BRENNKRAFTMASCHINE UND BRENNKRAFTMASCHINE FÜR EIN KRAFTFAHRZEUG**
METHOD FOR CONTROLLING AN ENGINE BRAKING DEVICE ON AN INTERNAL COMBUSTION ENGINE AND INTERNAL COMBUSTION ENGINE FOR A MOTOR VEHICLE
PROCÉDÉS DE COMMANDE D'UN DISPOSITIF DE FREIN MOTEUR D'UN MOTEUR À COMBUSTION INTERNE ET MOTEUR À COMBUSTION INTERNE DESTINÉ À UN VÉHICULE À MOTEUR

(30) Priorität: 18.12.2007 DE 102007060822
(43) Veröffentlichungstag der Anmeldung: 25.08.2010
(73) Patentinhaber: Daimler AG, 70327 Stuttgart (DE)
(72) Erfinder: GUGGOLZ, Manfred, 71229 Leonberg (DE); JESBERG, Michael, 70565 Stuttgart (DE); MARTIN, Bernd, 73269 Hochdorf (DE); ULMER, David, 70794 Filderstadt (DE); WAGNER, Marc, Olivier, 73730 Esslingen am Neckar (DE)
(74) Vertreter: JENSEN & SON
(86) Internationale Anmeldenummer: PCT/EP2008/009160
(87) Internationale Veröffentlichungsnummer: WO 2009/077036

(56) Entgegenhaltungen:
- EP-A- 0 638 455
- EP-A- 1 092 582
- WO-A-00/37786
- JP-A- 57 204 359
- US-A- 4 787 044
- US-A- 5 842 376

## Beschreibung

Die Erfindung betrifft Verfahren zum Steuern einer Motorbremseinrichtung einer Brennkraftmaschine eines Kraftfahrzeugs während eines Hochschaltvorgangs einer Getriebevorrichtung der Brennkraftmaschine sowie eine Brennkraftmaschine für ein Kraftfahrzeug gemäß dem Oberbegriff des Patentanspruchs 14.

Derartige Verfahren sowie derartige Brennkraftmaschinen sind beispielsweise bereits aus der EP 0 638 455 als bekannt zu entnehmen. Die Brennkraftmaschine umfasst dabei mehrere Zylinder, eine Motorbremseinrichtung, eine Kraftstoffzuführungseinrichtung und eine schaltbare Getriebevorrichtung, welche ihrerseits eine mittels einer Kupplung mit einer Kurbelwelle der Brennkraftmaschine koppelbare Eingangswelle umfasst. Die Motorbremseinrichtung wird zum Unterstützen der Getriebevorrichtung während eines Hochschaltvorgangs verwendet, wobei der Hochschaltvorgang mittels Sensoren erfasst wird. Bei herausgenommen Gang der Getriebevorrichtung und geschlossener Kupplung werden durch gleichzeitiges Aktivieren der Motorbremseinrichtung und Sperren der Kraftstoffzufuhr der Zylinder mittels der Kraftstoffzuführungseinrichtung die Zylinder in Bremsbetrieb gebracht. Dies bewirkt eine beschleunigte Reduzierung einer Drehzahl der Brennkraftmaschine und der über die geschlossene Kupplung mit der Kurbelwelle verbundenen Eingangswelle der Getriebevorrichtung, so dass die zum Einlegen eines höheren Gangs erforderliche Schaltzeit verringert und eine Verkürzung der Zugkraftunterbrechung im Antriebsstrang erreicht wird. Nach dem Erreichen einer Zieldifferenzdrehzahl zwischen zu schaltenden Zahnrädern der Getriebevorrichtung e kann der Hochschaltvorgang drehzahlsynchronisiert durchgeführt und die Kraftstoffzufuhr der Zylinder nach dem Deaktivieren der Motorbremseinrichtung zum Momentenaufbau wieder erhöht werden. Es ist auch denkbar, dass die Getriebevorrichtung eine Getriebebremse oder eine Sperrsynchronisation aufweist. Die Getriebebremse oder Sperrsynchronisation synchronisiert bei einer Hochschaltung bei geöffneter Kupplung die Drehzahlen der zu schaltenden Zahnräder, so dass in diesem Fall die Drehzahl der Kurbelwelle der Brennkraftmaschine an eine Drehzahl der Eingangswelle der Getriebevorrichtung angepasst wird.

Als nachteilig an dem bekannten Verfahren bzw. der bekannten Brennkraftmaschine ist dabei jedoch der Umstand anzusehen, dass die zum Aktivieren bzw. Deaktivieren der Motorbremseinrichtung benötigten Einschalt- und Ausschalttotzeiten vergleichsweise groß sind und zu einer unerwünschten Verlängerung des Hochschaltvorgangs führen. Dies ist jedoch unter anderem aus Gründen des Bedienungskomforts unerwünscht.

Aufgabe der vorliegenden Erfindung ist es daher, ein Verfahren sowie eine Brennkraftmaschine der eingangs genannten Art zu schaffen, welche eine Verkürzung des Hochschaltvorgangs und eine Erhöhung des Bedienungskomforts ermöglichen.

Die Aufgabe wird erfindungsgemäß durch Verfahren zum Steuern einer Motorbremseinrichtung einer Brennkraftmaschine eines Kraftfahrzeugs gemäß den Patentansprüchen 1, 5 und 9 sowie durch eine Brennkraftmaschine mit den Merkmalen des Patentanspruchs 14 gelöst. Vorteilhafte Ausgestaltungen mit zweckmäßigen und nicht-trivialen Weiterbildungen der Erfindung sind in den jeweiligen Unteransprüchen angegeben, wobei vorteilhafte Ausgestaltungen der Verfahren - soweit anwendbar - als vorteilhafte Ausgestaltungen der Brennkraftmaschine und umgekehrt anzusehen sind.

Ein Verfahren zum Steuern einer Motorbremseinrichtung einer Brennkraftmaschine eines Kraftfahrzeugs, welches eine Verkürzung des Hochschaltvorgangs und eine Erhöhung des Bedienungskomforts ermöglicht, ist erfindungsgemäß dadurch geschaffen, dass während des Hochschaltvorgangs einer Getriebevorrichtung der Brennkraftmaschine zumindest die Schritte a) Erfassen eines Hochschaltvorgangs, b)Sperren der Kraftstoffzufuhr einer zylinderbankindividuellen Kraftstoffzuführungseinrichtung einer ersten Zylinderbank der Brennkraftmaschine, c) In-Bremsbetrieb-Nehmen der ersten Zylinderbank mittels einer zylinderbankindividuellen Motorbremseinrichtung, d) Erhöhen der Kraftstoffzufuhr einer zweiten Zylinderbank, e) Herausnehmen eines Gangs der Getriebevorrichtung und f) Sperren der Kraftstoffzufuhr der zweiten Zylinderbank durchgeführt werden. Mit Hilfe des erfindungsgemäßen Verfahrens wird die Einschalttotzeit der Motorbremseinrichtung und damit der Hochschaltvorgang der Getriebevorrichtung vorteilhaft verkürzt. Die Einschalttotzeit der Motorbremseinrichtung bewirkt normalerweise, dass nach dem Einschalten der Motorbremseinrichtung eine gewisse Zeitdauer vergeht bis die Motorbremswirkung einsetzt. Im Unterschied zum Stand der Technik werden dabei erfindungsgemäß zwei Zylinderbänke der Brennkraftmaschine unabhängig voneinander gesteuert. Das Erhöhen der Kraftstoffzufuhr in Schritt d) kompensiert hierbei den durch das in Schritt c) In-Bremsbetrieb-Nehmen der ersten Zylinderbank verursachten Momentenabbau und erhält das gewünschte Moment so lange aufrecht, bis in Schritt e) der Gang herausgenommen wird. Sobald der Gang herausgenommen wird, wird die Kraftstoffzufuhr der zweiten Zylinderbank gemäß Schritt f) ganz unterbunden, so dass sich die Brennkraftmaschine zunächst mit der ersten Zylinderbank im Bremsbetrieb befindet, wodurch die Drehzahl der Brennkraftmaschine bzw. einer Eingangswelle der Getriebevorrichtung zum Einlegen eines höheren Gangs reduziert wird.

In einer vorteilhaften Ausgestaltung der Erfindung ist vorgesehen, dass das In-Bremsbetrieb-Nehmen der ersten Zylinderbank gemäß Schritt c) gleichzeitig mit dem Sperren der Kraftstoffzufuhr der ersten Zylinderbank gemäß Schritt b) durchgeführt wird. Die Schritte b) und c) können gleichzeitig durchgeführt werden, da die Kraftstoffzufuhr quasi augenblicklich gesperrt werden kann, so dass besonders schnell mit dem Erhöhen der Kraftstoffzufuhr der zweiten Zylinderbank gemäß Schritt d) begonnen werden kann.

In einer weiteren vorteilhaften Ausgestaltung der Erfindung ist vorgesehen, dass an Schritt f) anschließend die zweite Zylinderbank nach Ablauf ihrer Einschalttotzeit gemäß Schritt g) In-Bremsbetrieb-Genommen zweiten wird, wodurch die Drehzahlreduzierung der Brennkraftmaschine bzw. der Eingangswelle der Getriebevorrichtung zur geforderten Zieldifferenzdrehzahl zum drehzahlsynchronisierten Hochschaltvorgang weiter beschleunigt wird.

In einer weiteren vorteilhaften Ausgestaltung der Erfindung ist vorgesehen" dass das In-Bremsbetrieb-Nehmen der zweiten Zylinderbank gemäß Schritt g) gleichzeitig mit dem Sperren der Kraftstoffzufuhr der zweiten Zylinderbank gemäß Schritt f) durchgeführt wird. Die Schritte f) und g) können gleichzeitig durchgeführt werden, da die Kraftstoffzufuhr quasi augenblicklich gesperrt werden kann" so dass die Drehzahl der Brennkraftmaschine nach dem Herausnehmen des Gangs besonders schnell auf eine geforderte Zieldifferenzdrehzahl gesenkt wird.

Ein weiterer Aspekt der Erfindung betrifft ein Verfahren zum Steuern einer Motorbremseinrichtung einer Brennkraftmaschine eines Kraftfahrzeugs, wobei eine Verkürzung des Hochschaltvorgangs und eine Erhöhung des Bedienungskomforts erfindungsgemäß dadurch geschaffen ist, dass während eines Hochschaltvorgangs einer Getriebevorrichtung zumindest die Schritte a) Herausnehmen eines Gangs der Getriebevorrichtung, b) Sperren der Kraftstoffzufuhr einer zylinderbankindividuellen Kraftstoffzuführungseinrichtung einer ersten und zweiten Zylinderbank der Brennkraftmaschine, c) In-Bremsbetrieb-Nehmen der ersten Zylinderbank mittels einer zylinderbankindividuellen Motorbremseinrichtung, d) Ermitteln von Differenzdrehzahlen zwischen zuschaltenden Zahnrädern der Getriebevorrichtung oder einer Kurbelwelle der Brennkraftmaschine und einer Eingangswelle der Getriebevorrichtung mittels einer Drehzahlermittlungseinrichtung, e) Erreichen einer vorbestimmten Zieldifferenzzahl der Differenzdrehzahlen, f) Aus-dem-Bremsbetrieb-Nehmen der ersten Zylinderbank; g) Einlegen eines höheren Gangs der Getriebevorrichtung und h) Zuführen von Kraftstoff zu der zweiten Zylinderbank durchgeführt werden. Im Unterschied zum vorhergehenden Verfahren wird mit Hilfe des vorliegenden Verfahrens die Ausschalttotzeit der Motorbremseinrichtung verkürzt, wodurch der Hochschaltvorgang ebenfalls vorteilhaft beschleunigt wird. Die Ausschalttotzeit der Motorbremseinrichtung bewirkt normalerweise, dass die Motorbremswirkung nach dem Ausschalten eine gewisse Zeitdauer anhält. Daher muss die Zuführung von Kraftstoff für eine gewisse Zeitdauer nach dem Deaktivieren der Motorbremseinrichtung gesperrt werden, um ein gleichzeitiges Einspritzen und Motorbremsen auf einer Zylinderbank der Brennkraftmaschine zu verhindern. Dieses Sperren der Kraftstoffzufuhr bewirkt im Stand der Technik, dass nach dem Deaktivieren der Motorbremseinrichtung nicht unmittelbar wieder ein Moment aufgebaut werden kann und die Drehzahl der Brennkraftmaschine häufig zu stark abfällt. Indem in Schritt c) lediglich die erste Zylinderbank in Bremsbetrieb genommen wird, kann nach Schritt f) und g) in Schritt h) die zweite Zylinderbank ohne Rücksichtnahme auf die Ausschalttotzeit der ersten Zylinderbank zum Momentenaufbau herangezogen werden. Das Verfahren ermöglicht zudem eine verbesserte Unterstützung des Hochschaltvorgangs bei niedrigen Temperaturen, wodurch die Schaltbarkeit der Getriebevorrichtung weiter gesteigert wird. Neben einer Erhöhung des Bedienkomforts werden auch entsprechende Kostenoptimierungen realisiert, da keine zusätzlichen mechanischen, hydraulischen, pneumatischen oder sonstigen Maßnahmen zum Reduzieren der Ausschalttotzeit der Motorbremseinrichtung erforderlich sind. Dabei kann weiterhin vorgesehen sein, dass das Verfahren im Anschluss an ein zur Verkürzung der Einschalttotzeit der Motorbremseinrichtung geeignetes Verfahren gemäß einem der vorhergehenden Ausführungsbeispiele durchgeführt wird.

In einer vorteilhaften Ausgestaltung der Erfindung ist vorgesehen, dass das In-Bremsbetrieb-Nehmen der ersten Zylinderbank gemäß Schritt c) gleichzeitig mit dem Sperren der Kraftstoffzufuhr der ersten und zweiten Zylinderbank gemäß Schritt b) durchgeführt wird. Die Schritte b) und c) können gleichzeitig durchgeführt werden, da die Kraftstoffzufuhr quasi augenblicklich gesperrt werden kann, so dass besonders schnell mit dem Ermitteln von Differenzdrehzahlen gemäß Schritt d) begonnen werden kann.

In einer weiteren vorteilhaften Ausgestaltung der Erfindung ist vorgesehen, dass das Aus-dem-Bremsbetrieb-Nehmen der ersten Zylinderbank gemäß Schritt f) und/oder das Einlegen eines höheren Gangs der Getriebevorrichtung gemäß Schritt g) und/oder das Zuführen von Kraftstoff zu der zweiten Zylinderbank gemäß Schritt h) gleichzeitig durchgeführt wird, da auf diese Weise nach dem Deaktivieren der Motorbremseinrichtung ein unmittelbarer Momentenaufbau der Brennkraftmaschine ermöglicht wird und/oder besonders schnell ein Gang eingelegt werden kann.

In einer weiteren vorteilhaften Ausgestaltung der Erfindung ist vorgesehen, dass nach Schritt h) in einem weiteren Schritt i) mittels der Kraftstoffzuführungseinrichtung der ersten Zylinderbank Kraftstoff zugeführt wird, sobald eine Ausschalttotzeit der Motorbremseinrichtung der ersten Zylinderbank abgelaufen ist. Hierdurch befinden sich die beiden Zylinderbänke im befeuerten Betrieb und die Brennkraftmaschine kann ein entsprechend hohes Antriebsmoment bereitstellen.

Ein weiteres Verfahren zum Steuern der Motorbremseinrichtung, welches eine Verkürzung des Hochschaltvorgangs und eine Erhöhung des Bedienungskomforts ermöglicht, ist erfindungsgemäß dadurch geschaffen, dass während eines Hochschaltvorgangs einer Getriebevorrichtung der Brennkraftmaschine zumindest die Schritte a) Herausnehmen eines Gangs der Getriebevorrichtung, b) Sperren der Kraftstoffzufuhr einer zylinderbankindividuellen Kraftstoffzuführungseinrichtung einer ersten und zweiten Zylinderbank der Brennkraftmaschine, c) In-Bremsbetrieb-Nehmen der ersten und zweiten Zylinderbank der Brennkraftmaschine mittels einer zylinderbankindividuellen Motorbremseinrichtung, d) Ermitteln von Differenzdrehzahlen zwischen zu schaltenden Zahnrädern der Getriebevorrichtung oder einer Kurbelwelle der Brennkraftmaschine und einer Eingangswelle der Getriebevorrichtung mittels einer Drehzahlermittlungseinrichtung, e) Erreichen einer vorbestimmten ersten Zieldifferenzzahl der Differenzdrehzahlen, f) Aus-dem-Bremsbetrieb-Nehmen der zweiten Zylinderbank, g) Erreichen einer vorbestimmten zweiten Zieldifferenzzahl der Differenzdrehzahlen, h) Aus-dem-Bremsbetrieb-Nehmen der ersten Zylinderbank; i) Einlegen eines höheren Gangs der Getriebevorrichtung und i) Zuführen von Kraftstoff zu der zweiten Zylinderbank durchgeführt werden. Auch dieses Verfahren verkürzt die Ausschalttotzeit der Motorbremseinrichtung und ermöglicht somit eine Beschleunigung des Hochschaltvorgangs zusammen mit den damit verbundenen, bereits beschriebenen Vorteilen. In Schritt c) werden zunächst beide Zylinderbänke in Bremsbetrieb genommen, in Schritt f) wird jedoch die zweite Zylinderbank bereits vor dem Erreichen der zweiten Zieldifferenzdrehzahl aus dem Bremsbetrieb genommen und steht wieder zum Momentenaufbau zur Verfügung. Sobald in Schritt g) die zweite Zieldifferenzdrehzahl erreicht wird, wird in Schritt h) auch die erste Zylinderbank aus dem Bremsbetrieb genommen. Aufgrund der Ausschalttotzeit der Motorbremseinrichtung bremst die erste Zylinderbank dabei jedoch für eine gewisse Zeitdauer weiter. Dies wird nach Einlegen eines höheren Gangs in Schritt i) durch das Zuführen von Kraftstoff zu der zweiten Zylinderbank in Schritt j) kompensiert, so dass dennoch ein Momentenaufbau der Brennkraftmaschine ermöglicht ist. Auch bei diesem Verfahren kann vorgesehen sein, dass das Verfahren im Anschluss an ein zur Verkürzung der Einschalttotzeit der Motorbremseinrichtung geeignetes Verfahren gemäß einem der vorhergehenden Ausführungsbeispiele durchgeführt wird.

In einer vorteilhaften Ausgestaltung der Erfindung ist vorgesehen, dass das In-Bremsbetrieb-Nehmen der ersten und zweiten Zylinderbank gemäß Schritt c) gleichzeitig mit dem Sperren der Kraftstoffzufuhr der ersten und zweiten Zylinderbank gemäß Schritt b) durchgeführt wird. Die Schritte b) und c) können gleichzeitig durchgeführt werden, da die Kraftstoffzufuhr quasi augenblicklich gesperrt werden kann, so dass besonders schnell mit dem Ermitteln von Differenzdrehzahlen gemäß Schritt d) begonnen werden kann.

In einer weiteren vorteilhaften Ausgestaltung der Erfindung ist vorgesehen, dass die erste Zieldifferenzdrehzahl in Schritt e) derart gewählt wird, dass die zweite Zieldifferenzdrehzahl in Schritt g) während einer der zweiten Zylinderbank zugeordneten Ausschalttotzeit der Motorbremseinrichtung erreicht wird. Mit anderen Worten wird die zweite Zylinderbank in Schritt e) dann aus dem Bremsbetrieb genommen, wenn erwartet wird, dass innerhalb der Ausschalttotzeit der zweiten Zylinderbank die zweite Zieldifferenzdrehzahl sicher erreicht werden wird.

In einer weiteren vorteilhaften Ausgestaltung der Erfindung ist vorgesehen, dass das Aus-dem-Bremsbetrieb-Nehmen der ersten Zylinderbank gemäß Schritt h) und/oder das Einlegen eines höheren Gangs der Getriebevorrichtung gemäß Schritt i) und/oder das Zuführen von Kraftstoff zu der zweiten Zylinderbank gemäß Schritt j) gleichzeitig durchgeführt wird, da auf diese Weise nach dem Deaktivieren der Motorbremseinrichtung ein unmittelbarer Momentenaufbau der Brennkraftmaschine ermöglicht wird und/oder besonders schnell ein Gang eingelegt werden kann..

In einer weiteren vorteilhaften Ausgestaltung der Erfindung ist vorgesehen, dass nach Schritt i) in einem weiteren Schritt j) Kraftstoff mittels der Kraftstoffzuführungseinrichtung zu der ersten Zylinderbank zugeführt wird, sobald eine Ausschalttotzeit der ersten Zylinderbank abgelaufen ist.. Hierdurch befindet sich die die beiden Zylinderbänke im befeuerten Betrieb und die Brennkraftmaschine kann ein entsprechend hohes Antriebsmoment bereitstellen.

Ein weiterer Aspekt der Erfindung betrifft eine Brennkraftmaschine für ein Kraftfahrzeug, insbesondere ein Nutzkraftfahrzeug, wobei eine Verkürzung des Hochschaltvorgangs und eine Erhöhung des Bedienungskomforts erfindungsgemäß dadurch ermöglicht ist, dass die Brennkraftmaschine ausgelegt ist, ein Verfahren gemäß einem der vorhergehenden Ausführungsbeispiele durchzuführen. Die sich hieraus ergebende Vorteile sind bereits aus den vorhergehenden Beschreibungen zu entnehmen.

Dabei hat es sich als vorteilhaft gezeigt, dass die Motorbremseinrichtung als Staubremse und/oder als Dekompressionsbremse und/oder als Turbobrake ausgebildet ist. Jede der genannten Motorbremstypen ist dabei - im Unterschied beispielsweise zu Retardern - zum zylinderbankindividuellen Bremsbetrieb geeignet, wobei eine Abgasanlage der Brennkraftmaschine bei einer als Staubremse oder als Turbobrake ausgebildeten Motorbremseinrichtung entsprechend mehrflutig auszubilden ist. Die Bremsenergie der Brennkraftmaschine kann dadurch weiter verbessert werden, indem mehrere Motorbremseinrichtung, beispielsweise eine als Staubremse und eine als Dekompressionsbremse ausgebildete Motorbremseinrichtung, vorgesehen sind.

In einer weiteren vorteilhaften Ausgestaltung der Erfindung ist vorgesehen, dass die Getriebevorrichtung als manuelles und/oder als halbautomatisches und/oder als vollautomatisches Getriebe ausgebildet ist. Dies erlaubt eine hohe konstruktive Flexibilität der Brennkraftmaschine sowie einen entsprechenden Bedienungskomfort.

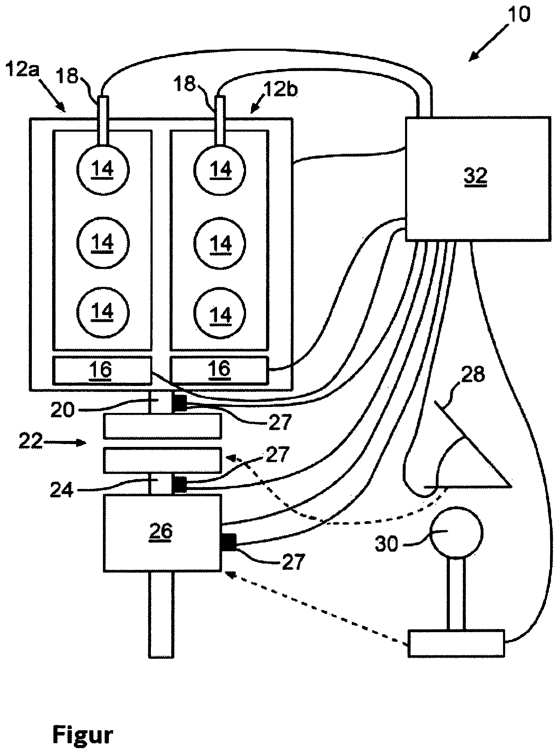

Weitere Vorteile, Merkmale und Einzelheiten der Erfindung ergeben sich anhand der nachfolgenden Beschreibung eines Ausführungsbeispiels sowie anhand der einzigen Figur, welche eine schematische Prinzipdarstellung einer Brennkraftmaschine gemäß einem Ausführungsbeispiel zeigt.

Die einzige Figur, in welcher gleiche oder funktionsgleiche Elemente mit identischen Bezugszeichen versehen sind, zeigt eine schematische Prinzipdarstellung einer Brennkraftmaschine 10 für ein Kraftfahrzeug gemäß einem Ausführungsbeispiel. Die Brennkraftmaschine 10, welche im gezeigten Ausführungsbeispiel als Hubkolbenmotor eines Nutzkraftfahrzeugs (nicht dargestellt) ausgebildet ist, umfasst eine erste Zylinderbank 12a und eine zweite Zylinderbank 12b mit jeweils drei Zylindern 14. Die Zylinderbänke 12a, 12b können dabei in einfachster Ausgestaltung auch lediglich jeweils einen Zylinder 14 umfassen. Alternativ oder zusätzlich kann vorgesehen sein, dass die erste bzw. die zweite Zylinderbank 12a, 12b nicht wie vorliegend mit geometrischen Zylinderreihen der Brennkraftmaschine 10 übereinstimmen, sondern in Reihe angeordnet sind, und/oder eine voneinander unterschiedliche Anzahl an Zylindern 14 aufweisen. Der ersten und der zweiten Zylinderbank 12a, 12b ist eine zylinderbankindividuelle Motorbremseinrichtung 16 zugeordnet, mittels welcher die erste und die zweite Zylinderbank 12a, 12b unabhängig voneinander in den Bremsbetrieb oder aus dem Bremsbetrieb genommen werden können. Die Motorbremseinrichtung 16 kann dabei beispielsweise als Staubremse, als Dekompressionsbremse oder als Turbobrake ausgebildet sein. Denkbar sind jedoch auch alternative Ausgestaltungsformen oder Kombinationen von zwei oder mehr Motorbremstypen. Geeignete Motorbremseinrichtungstypen sind beispielsweise aus der EP 458 857 B1 oder der US 2006/0005796 A1 zu entnehmen. Das In-Bremsbetrieb- bzw. Aus-dem-Bremsbetrieb-Nehmen der ersten oder zweiten Zylinderbank 12a, 12b beim Steuern der Motorbremseinrichtung 16 erfolgt dabei in Abhängigkeit des jeweiligen Motorbremseinrichtungstyps. Die Brennkraftmaschine 10 umfasst weiterhin eine zylinderbankindividuelle Kraftstoffzuführungseinrichtung 18, mittels welcher die beiden Zylinderbänke 12a, 12b unabhängig voneinander mit Kraftstoff zu versorgen sind. Dabei kann natürlich auch vorgesehen sein, dass die Kraftstoffzuführungseinrichtung 18 zylinderindividuell - beispielsweise als an sich bekannte Einspritzvorrichtung mit zylinderindividuell ansteuerbaren Einspritzventilen bzw. Einspritzdüsen - ausgebildet ist. Die Zylinder 14 der Brennkraftmaschine 10 treiben eine Kurbelwelle 20 an, welche mittels einer trennbaren Kupplung 22 mit einer Eingangswelle 24 einer schaltbaren Getriebevorrichtung 26 koppelbar bzw. von dieser entkoppelbar ist. Der Kurbelwelle 20, der Eingangswelle 24 und der Getriebevorrichtung 26 ist eine Drehzahlermittlungseinrichtung 27 zugeordnet, mittels welcher jeweilige Drehzahlen bzw. Differenzdrehzahlen ermittelbar sind. Hierbei ermittelt die Drehzahlermittlungsvorrichtung 27 bei sperrsynchronisierten Getriebevorrichtungen 26 oder Getriebevorrichtungen 26 mit einer Getriebebremse, Differenzdrehzahlen zwischen zu schaltenden Zahnrädern der Getriebevorrichtung 26 oder bei unsynchronisierten Getriebevorrichtungen 26 Differenzdrehzahlen zwischen der Kurbelwelle 20 und der Eingangswelle 24. Die Kupplung 22 ist über ein Kupplungspedal 28, die Getriebevorrichtung 26 über einen zugeordneten Schalthebel 30 in üblicher Weise betätigbar. Anstelle der gezeigten manuell betätigbaren Ausführung der Getriebevorrichtung 26 kann auch eine halbautomatische bzw. vollautomatische Ausgestaltung der Getriebevorrichtung 26 bzw. der Kupplung 22 vorgesehen sein. Die Motorbremseinrichtung 16, die Kraftstoffzuführungseinrichtung 18, die Getriebevorrichtung 26, die Drehzahlermittlungseinrichtung 27, das Kupplungspedal 28 sowie der Schalthebel 30 sind zum Austauschen von Steuersignalen mit einem Motorsteuergerät 32 der Brennkraftmaschine 10 gekoppelt, welches unterschiedliche Funktionen der Brennkraftmaschine 10 steuert. Alternativ können natürlich auch mehrere miteinander kommunizierende Steuergeräte vorgesehen sein.

Um bei einem Hochschaltvorgang der Getriebevorrichtung 26 eine Verkürzung der Schaltzeiten sowie eine Erhöhung des Bedienungskomforts zu erzielen, werden im Folgenden anhand der gezeigten Brennkraftmaschine 10 verschiedene geeignete Verfahren zum Steuern der Motorbremseinrichtung 16 erläutert. Die Motorbremseinrichtung 26 unterstützt dabei die Getriebevorrichtung 26 und ermöglicht eine beschleunigte Anpassung zwischen einer Drehzahl zu schaltender Zahnräder der Getriebevorrichtung oder der Kurbelwelle 20 und der Eingangswelle 24 der Getriebevorrichtung 26. Die Motorbremseinrichtung 26 weist eine Einschalt- und eine Ausschalttotzeit auf, welche jeweils zu einer Verlängerung des Hochschaltvorgangs führen. Die Ausschalttotzeit bewirkt zudem, dass eine Zuführung von Kraftstoff mittels der Kraftstoffzuführungseinrichtung 18 nach dem Ausschalten der Motorbremseinrichtung 16 bei aus dem Stand der Technik bekannten Verfahren für eine gewisse Zeitdauer gesperrt werden muss, um ein gleichzeitiges Einspritzen im befeuerten Betrieb und Motorbremsen der Brennkraftmaschine 10 zu verhindern.

Zur Verkürzung der Einschalttotzeit der Motorbremseinrichtung 16 wird zunächst der Hochschaltvorgang mittels nicht näher gezeigter Sensoren am Schalthebel 30 und/oder die Notwendigkeit eines Hochschaltens mittels einer entsprechenden Funktion in einem Steuerprogramm des Motorsteuergeräts 32 erfasst. Der ersten Zylinderbank 12a wird mittels der zylinderindividuellen Kraftstoffzuführungseinrichtung 18 die Kraftstoffzufuhr gesperrt und die zylinderindividuelle Motorbremseinrichtung 16 in Bremsbetrieb genommen. Um die hierdurch verursachte Bremswirkung zu kompensieren und ein gewünschtes Moment aufrecht zu halten, wird eine Kraftstoffzufuhr der zweiten Zylinderbank 12b mittels der Kraftstoffzuführungseinrichtung 18 erhöht, beispielsweise durch Einspritzen einer größeren Einspritzmenge. Nachdem manuell mittels des Schalthebels 30 oder automatisch mittels eines Steuerbefehls des Motorsteuergeräts 32 ein Gang der Getriebevorrichtung 26 herausgenommen wurde, wird die Kraftstoffzufuhr der zweiten Zylinderbank 12b gesperrt. Gleichzeitig oder anschließend wird die zweite Zylinderbank 12b in Bremsbetrieb genommen, wodurch sich nach der Einschalttotzeit der Motorbremseinrichtung 16 der zweiten Zylinderbank 12b alle Zylinder 14 der Brennkraftmaschine 10 im Bremsbetrieb befinden und eine beschleunigte Drehzahlanpassung zwischen der Kurbelwelle 20 und der Eingangswelle 24 bewirken.

Um die bisherige Notwendigkeit der für eine gewisse Zeitdauer gesperrten Kraftstoffzufuhr aufgrund der Ausschalttotzeit der Motorbremseinrichtung 16 zu eliminieren, wird die erste Zylinderbank 12a alternativ oder anschließend während eines Hochschaltvorgangs in Bremsbetrieb genommen. Durch Ermitteln von Differenzdrehzahlen zwischen zu schaltender Zahnräder der Getriebevorrichtung 26 oder der Kurbelwelle 20 und der Eingangswelle 24 mittels der Drehzahlermittlungseinrichtung 27 wird das Erreichen einer gewünschten Zieldifferenzdrehzahl überwacht. Die Zieldifferenzdrehzahl geht in der Regel gegen einen Wert Null. Sobald die Zieldifferenzdrehzahl erreicht ist, wird ein höherer Gang eingelegt und die erste Zylinderbank 12a aus dem Bremsbetrieb genommen. Gleichzeitig der zweiten Zylinderbank 12b Kraftstoff zugeführt, so dass ein Momentenaufbau der Brennkraftmaschine 10 ermöglicht ist.

Alternativ hierzu kann die Ausschalttotzeit der Motorbremseinrichtung 16 dadurch eliminiert werden, dass zunächst die erste Zylinderbank 12a und die zweite Zylinderbank 12b gemeinsam mittels der Motorbremseinrichtung 16 in Bremsbetrieb genommen werden. Wenn erwartet wird, dass in der Ausschalttotzeit der der zweiten Zylinderbank 12b zugeordneten Motorbremseinrichtung 16 eine erste Zieldifferenzdrehzahl sicher erreicht wird, wird die zweite Zylinderbank 12b vorzeitig aus dem Bremsbetrieb genommen. Sobald die Differenzdrehzahl zwischen der Kurbelwelle 20 und der Eingangswelle 24 der Getriebevorrichtung 26 eine zweite niedrigere Zieldifferenzdrehzahl erreicht, wird auch die erste Zylinderbank 12a aus dem Bremsbetrieb genommen und ein höherer Gang eingelegt. Aufgrund der Ausschalttotzeit der Motorbremseinrichtung 16 bremst die erste Zylinderbank 12a jedoch eine gewisse Zeitdauer weiter. Dies wird dadurch kompensiert, dass der zweiten Zylinderbank eine entsprechende Kraftstoffmenge zugeführt und ein entsprechender Momentenaufbau ermöglicht wird. Sobald die Ausschalttotzeit der der ersten Zylinderbank 12a zugeordneten Motorbremseinrichtung 16 abgelaufen ist, kann wieder auf allen Zylindern 14 eingespritzt werden.

## Patentansprüche

1. Verfahren zum Steuern einer Motorbremseinrichtung (16) einer Brennkraftmaschine (10) eines Kraftfahrzeugs, bei welchem während eines Hochschaltvorgangs einer Getriebevorrichtung (26) der Brennkraftmaschine (10) zumindest folgende Schritte durchgeführt werden:
a) Erfassen eines Hochschaltvorgangs;
b) Sperren der Kraftstoffzufuhr einer zylinderbankindividuellen Kraftstoffzuführungseinrichtung (18) einer ersten Zylinderbank (12a) der Brennkraftmaschine (10);
c) In-Bremsbetrieb-Nehmen der ersten Zylinderbank (12a) mittels einer zylinderbankindividuellen Motorbremseinrichtung (16);
d) Erhöhen der Kraftstoffzufuhr einer zweiten Zylinderbank (12b) ;
e) Herausnehmen eines Gangs der Getriebevorrichtung (26) und
f) Sperren der Kraftstoffzufuhr der zweiten Zylinderbank (12b) .

2. Verfahren nach Anspruch 1,
**dadurch gekennzeichnet, dass**
das In-Bremsbetrieb-Nehmen der ersten Zylinderbank (12a) gemäß Schritt c) gleichzeitig mit dem Sperren der Kraftstoffzufuhr der ersten Zylinderbank (12a) gemäß Schritt b) durchgeführt wird.

3. Verfahren nach Anspruch 1 oder 2,
**dadurch gekennzeichnet, dass**
nach Schritt f) in einem weiteren Schritt g) die zweite Zylinderbank (12b) In-Bremsbetrieb-Genommen wird.

4. Verfahren nach Anspruch 3,
**dadurch gekennzeichnet, dass**
das In-Bremsbetrieb-Nehmen der zweiten Zylinderbank (12b) gemäß Schritt g) gleichzeitig mit dem Sperren der Kraftstoffzufuhr der zweiten Zylinderbank (12b) gemäß Schritt f) durchgeführt wird.

5. Verfahren zum Steuern einer Motorbremseinrichtung (16) einer Brennkraftmaschine (10) eines Kraftfahrzeugs, wobei während eines Hochschaltvorgangs einer Getriebevorrichtung (26) der Brennkraftmaschine (10) zumindest folgende Schritte durchgeführt werden:
a) Herausnehmen eines Gangs der Getriebevorrichtung (26) ;
b) Sperren der Kraftstoffzufuhr einer zylinderbankindividuellen Kraftstoffzuführungseinrichtung (18) einer ersten und zweiten Zylinderbank (12a, 12b) der Brennkraftmaschine (10);
c) In-Bremsbetrieb-Nehmen der ersten Zylinderbank (12a) mittels einer zylinderbankindividuellen Motorbremseinrichtung (16);
d) Ermitteln von Differenzdrehzahlen zwischen zu schaltenden Zahnrädern der Getriebevorrichtung (26) oder einer Kurbelwelle (20) der Brennkraftmaschine (10) und einer Eingangswelle (24) der Getriebevorrichtung (26) mittels einer Drehzahlermittlungseinrichtung (27);
e) Erreichen einer vorbestimmten Zieldifferenzzahl der Differenzdrehzahlen;
f) Aus-dem-Bremsbetrieb-Nehmen der ersten Zylinderbank (12a)
g) Einlegen eines höheren Gangs der Getriebevorrichtung (26) und
h) Zuführen von Kraftstoff zu der zweiten Zylinderbank (12b) .

6. Verfahren nach Anspruch 5,
**dadurch gekennzeichnet, dass**
das In-Bremsbetrieb-Nehmen der ersten Zylinderbank (12a) gemäß Schritt c) gleichzeitig mit dem Sperren der Kraftstoffzufuhr der ersten und der zweiten Zylinderbank (12a, 12b) gemäß Schritt b) durchgeführt wird.

7. Verfahren nach Anspruch 5 oder 6,
**dadurch gekennzeichnet, dass**
das Aus-dem-Bremsbetrieb-Nehmen der ersten Zylinderbank (12a) gemäß Schritt f) und/oder das Einlegen eines höheren Gangs der Getriebevorrichtung gemäß Schritt g) und/oder das Zuführen von Kraftstoff zu der zweiten Zylinderbank (12b) gemäß Schritt h) gleichzeitig durchgeführt wird.

8. Verfahren nach einem der Ansprüche 5 bis 7,
**dadurch gekennzeichnet, dass**
nach Schritt h) in einem weiteren Schritt i) mittels der Kraftstoffzuführungseinrichtung (18) der ersten Zylinderbank (12a) Kraftstoff zugeführt wird, sobald eine Ausschalttotzeit der Motorbremseinrichtung (16) der ersten Zylinderbank (12a) abgelaufen ist.

9. Verfahren zum Steuern einer Motorbremseinrichtung (16) einer Brennkraftmaschine (10) eines Kraftfahrzeugs, bei welchem während eines Hochschaltvorgangs einer Getriebevorrichtung (26) der Brennkraftmaschine (10) zumindest folgende Schritte durchgeführt werden:
a) Herausnehmen eines Gangs der Getriebevorrichtung (26) ;
b) Sperren der Kraftstoffzufuhr einer zylinderbankindividuellen Kraftstoffzuführungseinrichtung (18) einer ersten und zweiten Zylinderbank (12a, 12b) der Brennkraftmaschine (10);
c) In-Bremsbetrieb-Nehmen der ersten und zweiten Zylinderbank (12a, 12b) mittels einer zylinderbankindividuellen Motorbremseinrichtung (16);
d) Ermitteln von Differenzdrehzahlen zwischen Zahnrädern der Getriebevorrichtung (26) oder einer Kurbelwelle (20) der Brennkraftmaschine (10) und einer Eingangswelle (24) der Getriebevorrichtung (26) mittels einer Drehzahlermittlungseinrichtung (27);
e) Erreichen einer vorbestimmten ersten Zieldifferenzzahl der Differenzdrehzahlen;
f) Aus-dem-Bremsbetrieb-Nehmen der zweiten Zylinderbank (12b);
g) Erreichen einer vorbestimmten zweiten Zieldifferenzzahl der Differenzdrehzahlen;
h) Aus-dem-Bremsbetrieb-Nehmen der ersten Zylinderbank (12a)
i) Einlegen eines höheren Gangs der Getriebevorrichtung (26) und
j) Zuführen von Kraftstoff zu der zweiten Zylinderbank (12b).

10. Verfahren nach Anspruch 9,
**dadurch gekennzeichnet, dass**
das In-Bremsbetrieb-Nehmen der ersten und zweiten Zylinderbank (12a, 12b) gemäß Schritt c) gleichzeitig mit dem Sperren der Kraftstoffzufuhr der ersten und der zweiten Zylinderbank (12a, 12b) gemäß Schritt b) durchgeführt wird.

11. Verfahren nach Anspruch 9 oder 10,
**dadurch gekennzeichnet, dass**
die erste Zieldifferenzdrehzahl in Schritt e) derart gewählt wird, dass die zweite Zieldifferenzdrehzahl in Schritt g) während einer der zweiten Zylinderbank (12b) zugeordneten Ausschalttotzeit der Motorbremseinrichtung (16) erreicht wird.

12. Verfahren nach einem der Ansprüche 9 bis 11,
**dadurch gekennzeichnet, dass**
das Aus-dem-Bremsbetrieb-Nehmen der ersten Zylinderbank (12a) gemäß Schritt h) und/oder das Einlegen eines höheren Gangs der Getriebevorrichtung gemäß Schritt i) und/oder das Zuführen von Kraftstoff zu der zweiten Zylinderbank (12b) gemäß Schritt j) gleichzeitig durchgeführt wird.

13. Verfahren nach einem der Ansprüche 9 bis 12,
**dadurch gekennzeichnet, dass**
nach Schritt j) in einem weiteren Schritt k) Kraftstoff mittels der Kraftstoffzuführungseinrichtung (18) zu der ersten Zylinderbank (12a) zugeführt wird, sobald eine Ausschalttotzeit der Motorbremseinrichtung (16) der ersten Zylinderbank (12a) abgelaufen ist.

14. Brennkraftmaschine (10) für ein Kraftfahrzeug, insbesondere ein Nutzkraftfahrzeug, mit einer ersten Zylinderbank (12a) und einer zweiten Zylinderbank (12b), einer zylinderbankindividuellen Motorbremseinrichtung (16), einer zylinderbankindividuellen Kraftstoffzuführungseinrichtung (18) und einer schaltbaren Getriebevorrichtung (26), welche zu schaltende Zahnräder und eine mittels einer Kupplung (22) mit einer Kurbelwelle (20) der Brennkraftmaschine (10) koppelbare Eingangswelle (24) umfasst,
**dadurch gekennzeichnet, dass**
die Brennkraftmaschine (10) ausgelegt ist, ein Verfahren gemäß einem der Ansprüche 1 bis 13 durchzuführen.

15. Brennkraftmaschine (10) nach Anspruch 14,
**dadurch gekennzeichnet, dass**
die Motorbremseinrichtung (16) als Staubremse und/oder als Dekompressionsbremse und/oder als Turbobrake ausgebildet ist.

16. Brennkraftmaschine (10) nach Anspruch 14 oder 15,
**dadurch gekennzeichnet, dass**
die Getriebevorrichtung (26) als manuelles und/oder als halbautomatisches und/oder als vollautomatisches Getriebe ausgebildet ist.

## Claims

1. Method for controlling an engine braking device (16) of an internal combustion engine (10) of a motor vehicle, wherein at least the following steps are carried out during an upshift operation of a gearbox device (26) of the internal combustion engine (10):
a) the detection of an upshift operation;
b) the blocking of the fuel supply of a cylinder bank-specific fuel supply device (18) of a first cylinder bank (12a) of the internal combustion engine (10);
c) the putting into braking mode of the first cylinder bank (12a) by means of a cylinder bank-specific engine braking device (16);
d) the increasing of the fuel supply of a second cylinder bank (12b);
e) the disengagement of a gear of the gearbox device (26); and
f) the blocking of the fuel supply of the second cylinder bank (12b).

2. Method according to claim 1,
**characterised in that**
the putting into braking mode of the first cylinder bank (12a) according to step c) is carried out simultaneously with the blocking of the fuel supply of the first cylinder bank (12a) according to step b).

3. Method according to claim 1 or 2,
**characterised in that**
after step f) the second cylinder bank (12b) is put into braking mode in a further step g).

4. Method according to claim 3,
**characterised in that**
the putting into braking mode of the second cylinder bank (12b) according to step g) is carried out simultaneously with the blocking of the fuel supply of the second cylinder bank (12b) according to step f).

5. Method for controlling an engine braking device (16) of an internal combustion engine (10) of a motor vehicle, wherein at least the following steps are carried out during an upshift operation of a gearbox device (26) of the internal combustion engine (10):
a) the disengagement of a gear of the gearbox device (26);
b) the blocking of the fuel supply of a cylinder bank-specific fuel supply device (18) of a first and a second cylinder bank (12a, 12b) of the internal combustion engine (10);
c) the putting into braking mode of the first cylinder bank (12a) by means of a cylinder bank-specific engine braking device (16);
d) the determination of differences in speed between gears to be shifted of the gearbox device (26) or a crankshaft (20) of the internal combustion engine (10) and an input shaft (24) of the gearbox device (26) by means of a speed detection device (27);
e) the arrival at a predetermined target difference value of the differences in speed;
f) the taking out of braking mode of the first cylinder bank (12a);
g) the engagement of a higher gear of the gearbox device (26); and
h) the supply of fuel to the second cylinder bank (12b).

6. Method according to claim 5,
**characterised in that**
the putting into braking mode of the first cylinder bank (12a) according to step c) is carried out simultaneously with the blocking of the fuel supply of the first and the second cylinder bank (12a, 12b) according to step b).

7. Method according to claim 5 or 6,
**characterised in that**
the taking out of braking mode of the first cylinder bank (12a) according to step f) and/or the engagement of a higher gear of the gearbox device (26) according to step g) and/or the supply of fuel to the second cylinder bank (12b) according to step h) is/are carried out simultaneously.

8. Method according to any of claims 5 to 7,
**characterised in that**
after step h) fuel is supplied to the first cylinder bank (12a) by means of the fuel supply device (18) in a further step i) as soon as a switch-off dead time of the engine braking device (16) of the first cylinder bank (12a) has elapsed.

9. Method for controlling an engine braking device (16) of an internal combustion engine (10) of a motor vehicle, wherein at least the following steps are carried out during an upshift operation of a gearbox device (26) of the internal combustion engine (10):
a) the disengagement of a gear of the gearbox device (26);
b) the blocking of the fuel supply of a cylinder bank-specific fuel supply device (18) of a first and a second cylinder bank (12a, 12b) of the internal combustion engine (10);
c) the putting into braking mode of the first and the second cylinder bank (12a, 12b) by means of a cylinder bank-specific engine braking device (16);
d) the determination of the differences in speed between gears of the gearbox device (26) or a crankshaft (20) of the internal combustion engine (10) and an input shaft (24) of the gearbox device (26) by means of a speed detection device (27);
e) the arrival at a predetermined first target difference value of the differences in speed;
f) the taking out of braking mode of the second cylinder bank (12b);
g) the arrival at a predetermined second target difference value of the differences in speed;
h) the taking out of braking mode of the first cylinder bank (12a);
i) the engagement of a higher gear of the gearbox device (26); and
h) the supply of fuel to the second cylinder bank (12b).

10. Method according to claim 9,
**characterised in that**
the putting into braking mode of the first and the second cylinder bank (12a, 12b) according to step c) is carried out simultaneously with the blocking of the fuel supply of the first and the second cylinder bank (12a, 12b) according to step b).

11. Method according to claim 9 or 10,
**characterised in that**
the first target difference in speeds in step e) is chosen such that the second target difference in speeds in step g) is reached during a switch-off dead time of the engine braking device (16) which is assigned to the second cylinder bank (12b).

12. Method according to any of claims 9 to 11,
**characterised in that**
the taking out of braking mode of the first cylinder bank (12a) according to step h) and/or the engagement of a higher gear of the gearbox device (26) according to step i) and/or the supply of fuel to the second cylinder bank (12b) according to step j) is/are carried out simultaneously.

13. Method according to any of claims 9 to 12,
**characterised in that**
after step j) fuel is supplied to the first cylinder bank (12a) by means of the fuel supply device (18) in a further step k) as soon as a switch-off dead time of the engine braking device (16) of the first cylinder bank (12a) has elapsed.

14. Internal combustion engine (10) for a motor vehicle, in particular a commercial vehicle, the engine (10) comprising a first cylinder bank (12a) and a second cylinder bank (12b), a cylinder bank-specific engine braking device (16), a cylinder bank-specific fuel supply device (18) and a shiftable gearbox device (26) comprising gears to be shifted and an input shaft (24) which can be coupled to a crankshaft (20) of the internal combustion engine (10),
**characterised in that**
the internal combustion engine (10) is designed to carry out a method according to any of claims 1 to 13.

15. Internal combustion engine (10) according to claim 14,
**characterised in that**
the engine braking device (16) is designed as an exhaust brake and/or a decompression brake and/or a turbo brake.

16. Internal combustion engine (10) according to claim 14 or 15,
**characterised in that**
the gearbox device (26) is designed as a manual and/or as a semiautomatic and/or as a fully automatic gearbox.

## Revendications

1. Procédé de commande d'un dispositif de frein moteur (16) d'un moteur à combustion interne (10) d'un véhicule automobile, selon lequel pendant un processus de passage à la vitesse supérieure d'un dispositif de boîte de vitesses (26) du moteur à combustion interne (10) au moins les étapes suivantes sont exécutées :
a) détection d'un processus de passage à la vitesse supérieure ;
b) blocage de l'alimentation de carburant d'un dispositif d'alimentation en carburant (18) spécifique à une rangée individuelle de cylindres d'une première rangée de cylindres (12a) du moteur à combustion interne (10) ;
c) mise en fonction de frein de la première rangée de cylindres (12a) au moyen d'un dispositif de frein moteur (16) spécifique à une rangée individuelle de cylindres ;
d) augmentation de l'alimentation en carburant d'une seconde rangée de cylindres (12b) ;
e) retrait d'un rapport du dispositif de boîte de vitesses (26) et
f) blocage de l'alimentation en carburant de la seconde rangée de cylindres (12b).

2. Procédé selon la revendication 1, **caractérisé en ce que** la mise en fonctionnement de frein de la première rangée de cylindres (12a) dans l'étape c) s'effectue en même temps que le blocage de l'alimentation en carburant de la première rangée de cylindres (12a) dans l'étape b).

3. Procédé selon la revendication 1 ou la revendication 2, **caractérisé en ce que** après l'étape f) la seconde rangée de cylindres (12b) est freinée dans une autre étape g).

4. Procédé selon la revendication 3, **caractérisé en ce que** la mise en fonctionnement de frein de la seconde rangée de cylindres (12b) dans l'étape g) s'effectue en même temps que le blocage de l'alimentation en carburant de la seconde rangée de cylindres (12b) dans l'étape f).

5. Procédé de commande d'un dispositif de frein moteur (16) d'un moteur à combustion interne (10) d'un véhicule automobile, pendant le processus de passage à la vitesse supérieure d'un dispositif de boîte de vitesses (26) du moteur à combustion interne (10) au moins les étapes suivantes sont exécutées :
a) retrait d'un rapport du dispositif de boîte de vitesses (26) ;
b) blocage de l'alimentation en carburant d'un dispositif d'alimentation en carburant (18) spécifique à une rangée individuelle de cylindres d'une première et d'une seconde rangée de cylindres (12a, 12b) du moteur à combustion interne (10) ;
c) mise en fonctionnement de frein de la première rangée de cylindres (12a) au moyen d'un dispositif de frein moteur (16) spécifique à une rangée individuelle de cylindres ;
d) détermination des régimes différentiels entre des roues dentées à commuter du dispositif de boîte de vitesses (26) ou d'un vilebrequin (20) du moteur à combustion interne (10) et d'un arbre d'entrée (24) du dispositif de boîte de vitesses (26) au moyen d'un dispositif de détermination de régime (27) ;
e) atteinte d'un régime différentiel cible prédéfini parmi les régimes différentiels ;
f) arrêt du frein de la première rangée de cylindres (12a) ;
g) mise en prise d'un rapport plus élevé du dispositif de boîte de vitesses (26) et
h) alimentation en carburant de la seconde rangée de cylindres (12b).

6. Procédé selon la revendication 5, **caractérisé en ce que** la mise en fonctionnement de frein de la première rangée de cylindres (12a) dans l'étape c) s'effectue en même temps que le blocage de l'alimentation en carburant de la première et de la seconde rangée de cylindres (12a, 12b) dans l'étape b).

7. Procédé selon la revendication 5 ou la revendication 6, **caractérisé en ce que** l'arrêt du frein de la première rangée de cylindres (12a) dans l'étape f) et/ou la mise en prise d'un rapport plus élevé du dispositif de boîte de vitesses dans l'étape g) et/ou l'alimentation en carburant de la seconde rangée de cylindres (12b) dans l'étape h) s'effectuent en même temps.

8. Procédé selon l'une quelconque des revendications 5 à 7, **caractérisé en ce qu'**après l'étape h) dans une autre étape i) le dispositif d'alimentation en carburant (18) alimente en carburant la première rangée de cylindres (12a), dès qu'un temps mort de commutation du dispositif de frein moteur (16) de la première rangée de cylindres (12a) s'est écoulé.

9. Procédé de commande d'un dispositif de frein moteur (16) d'un moteur à combustion interne (10) d'un véhicule automobile, selon lequel pendant le processus de passage à une vitesse supérieure d'un dispositif de boîte de vitesses (26) du moteur à combustion interne (10), au moins les étapes suivantes sont exécutées :
a) retrait d'un rapport du dispositif de boîte de vitesses (26) ;
b) blocage de l'alimentation en carburant d'un dispositif d'alimentation en carburant (18) spécifique à une rangée individuelle de cylindres d'une première et d'une seconde rangée de cylindres (12a, 12b) du moteur à combustion interne (10) ;
c) mise en fonctionnement de frein de la première et de la seconde rangée de cylindres (12a, 12b) au moyen d'un dispositif de frein moteur (16) spécifique à une rangée individuelle de cylindres ;
d) détermination des régimes différentiels entre les roues dentées du dispositif de boîte de vitesses (26) ou d'un vilebrequin (20) du moteur à combustion interne (10) et d'un arbre d'entrée (24) du dispositif de boîte de vitesses (26) au moyen d'un dispositif de détermination de régime (27) ;
e) atteinte d'un premier régime différentiel prédéfini parmi les régimes différentiels ;
f) arrêt de fonctionnement de frein de la seconde rangée de cylindres (12b) ;
g) atteinte d'un second régime différentiel prédéfini parmi les régimes différentiels ;
h) arrêt de fonctionnement de frein de la première rangée de cylindres (12a)
i) mise en prise d'un rapport plus élevé du dispositif de boîte de vitesses (26) et
j) alimentation en carburant de la seconde rangée de cylindres (12b).

10. Procédé selon la revendication 9, **caractérisé en ce que** la mise en fonctionnement de frein de la première et de la seconde rangée de cylindres (12a, 12b) dans l'étape c) s'effectue en même temps que le blocage de l'alimentation en carburant de la première et de la seconde rangée de cylindres (12a, 12b) dans l'étape b).

11. Procédé selon la revendication 9 ou la revendication 10, **caractérisé en ce que** le premier régime différentiel cible dans l'étape e) est sélectionné de sorte que le second régime différentiel cible dans l'étape g) soit atteint pendant un temps mort de commutation associé à la seconde rangées de cylindres (12b) du dispositif de frein moteur (16).

12. Procédé selon l'une quelconque des revendications 9 à 11, **caractérisé en ce que** l'arrêt de fonctionnement de frein de la première rangée de cylindres (12a) dans l'étape h) et/ou la mise en prise d'un rapport plus élevé du dispositif de boite de vitesses selon l'étape i) et/ou l'alimentation en carburant de la seconde rangée de cylindres (12b) dans l'étape j) s'effectue en même temps.

13. Procédé selon l'une quelconque des revendications 9 à 12, **caractérisé en ce que** selon l'étape j) dans une autre étape k) la première rangée de cylindres (12a) est alimentée en carburant au moyen du dispositif d'alimentation en carburant (18), dès qu'un temps mort de commutation du dispositif de frein moteur (16) de la première rangée de cylindres (12a) s'est écoulé.

14. Moteur à combustion (10) pour un véhicule automobile, en particulier un véhicule utilitaire, comprenant une première rangée de cylindres (12a) et une seconde rangée de cylindres (12b), un dispositif de frein moteur (16) spécifique à une rangée individuelle de cylindres, un dispositif d'alimentation en carburant (18) spécifique à une rangée individuelle de cylindres et un dispositif de boîte de vitesses commutable (26), qui comprend un arbre d'entrée (24) pouvant être accouplé au moyen d'un couplage (22) à un arbre à manivelle (20) du moteur à combustion interne (10) et des roues dentées à commuter, **caractérisé en ce que** le moteur à combustion interne (10) est conçu pour exécuter un procédé selon l'une quelconque des revendications 1 à 13.

15. Moteur à combustion interne (10) selon la revendication 14, **caractérisé en ce que** le dispositif de frein moteur (16) est conçu en tant que frein sur échappement et/ou en tant que frein de décompression et/ou en tant que Turbobrake.

16. Moteur à combustion interne (10) selon la revendication 14 ou la revendication 15, **caractérisé en ce que** le dispositif de boîte de vitesses (26) est conçu en tant que boîte de vitesses manuelle et/ou semi-automatique et/ou entièrement automatique.
